# EUROPEAN PATENT SPECIFICATION

(11) **EP 2 094 772 B1**
(45) Date of publication and mention of the grant of the patent: **27.01.2010**
(21) Application number: 07799361.6
(22) Date of filing: 06.07.2007
(51) Int. Cl.: C08K 3/00, C08K 3/04, C08K 3/38

(54) **THERMALLY CONDUCTING AND ELECTRICALLY INSULATING MOLDABLE COMPOSITIONS AND METHODS OF MANUFACTURE THEREOF**
WÄRMELEITENDE UND ELEKTRISCH ISOLIERENDE FORMMASSEN UND HERSTELLUNGSVERFAHREN DAFÜR
COMPOSITIONS POUVANT ÊTRE MOULÉES THERMIQUEMENT CONDUCTRICES ET ÉLECTRIQUEMENT ISOLANTES ET PROCÉDÉS DE FABRICATION DE CELLES-CI

(30) Priority: 20.12.2006 US 870941 P; 21.03.2007 US 689228
(43) Date of publication of application: 02.09.2009
(73) Proprietor: SABIC Innovative Plastics IP B.V., 4612 PX Bergen op Zoom (NL)
(72) Inventor: CHARATI, Sanjay, Gurabasappa, Domlur, Bangalore, Karnataka 560071 (IN); GHOSH, Soumyadeb, Kundanhalli, Bangalore 560037 (IN); HR, Manjunath, Bangalore, Karnataka 562132 (IN); SAAK, Jennifer, Su, Maple Glen, PA 19002 (US); TANDON, Kunj, Bangalore, Karnataka 560065 (IN)
(74) Representative: Gesthuysen, von Rohr & Eggert
(86) International application number: PCT/US2007/072958
(87) International publication number: WO 2008/079438

(56) References cited:
- WO-A-2006/039291
- US-A1- 2004 152 829
- DATABASE WPI Week 200367 Derwent Publications Ltd., London, GB; AN 2003-700592 XP002455554 -& JP 2003 105108 A (FINE RUBBER KENKYUSHO KK) 9 April 2003 (2003-04-09)
- DATABASE WPI Week 198546 Derwent Publications Ltd., London, GB; AN 1985-286248 XP002455555 -& JP 60 195140 A (MEIDENSHA ELEC MFG CO LTD) 3 October 1985 (1985-10-03)
- DATABASE WPI Week 200749 Derwent Publications Ltd., London, GB; AN 2007-501159 XP002455537 -& JP 2007 099799 A (MITSUBISHI ENG PLASTICS KK) 19 April 2007 (2007-04-19)

## Description

### BACKGROUND

This disclosure relates to moldable compositions that are thermally conducting and electrically insulating and methods of manufacture thereof.

Commercially available thermally conducting, moldable compositions are generally filled with thermally conducting fillers such as alumina or boron nitride. Alumina, however, is abrasive in nature and damages processing equipment. In addition, the low density of alumina makes the incorporation of adequate quantities of alumina difficult.

Boron nitride is also used as filler in thermally conductive moldable compositions. Boron nitride is costly and reduces the melt flow of the composition thereby making processing expensive. It is therefore desirable to find filler compositions for thermally conducting moldable compositions that are inexpensive, that improve melt flow during processing, and that produce compositions having a suitable balance of mechanical and thermal properties.

### SUMMARY

Disclosed herein is a moldable composition, comprising an organic polymer; a filler composition comprising graphite; and boron nitride, wherein the moldable composition has an electrical resistivity greater than or equal to 10¹³ ohm/sq, wherein the moldable composition has a melt flow index of about 1 to 30 grams per 10 minutes when measured at a temperature of 280°C under a load of 16 kgf/cm². Disclosed herein too is a moldable composition, comprising 30 to 85 wt% of an organic polymer; a filler composition, comprising 10 to 30 wt% graphite; 5 to 60 wt% boron nitride; wherein the moldable composition has a thermal conductivity of 2 to 6 Watts per meter-Kelvin; and an electrical resistivity greater than or equal to 10¹³ ohm/sq.

Disclosed herein too is a method of manufacturing a moldable composition comprising melt blending a moldable composition comprising an organic polymer; a filler composition comprising graphite, and boron nitride, wherein the moldable composition has an electrical resistivity greater than or equal to 10¹³ ohm/sq.

### DETAILED DESCRIPTION

Disclosed herein is a moldable composition that is thermally conducting, and electrically insulating. The moldable composition comprises an organic polymer, and a filler composition comprising graphite and boron nitride, wherein the moldable composition has a bulk surface resistivity greater than or equal to 10¹³ ohm/sq, while displaying a thermal conductivity greater than or equal to 2 W/m-K. The moldable composition displays a melt flow index of about 1 to 30 grams per 10 minutes at a temperature of 280°C and a load of 16 kg-f/cm² and can therefore be easily processed. The moldable composition can be advantageously molded into desirable shapes and forms, and can have a class A surface finish.

The organic polymer used in the moldable composition may be selected from a wide variety of thermoplastic resins, blend of thermoplastic resins, thermosetting resins, or blends of thermoplastic resins with thermosetting resins. The organic polymer may also be a blend of polymers, copolymers, terpolymers, or combinations comprising at least one of the foregoing organic polymers. The organic polymer can also be an oligomer, a homopolymer, a copolymer, a block copolymer, an alternating block copolymer, a random polymer, a random copolymer, a random block copolymer, a graft copolymer, a star block copolymer, a dendrimer, or the like, or a combination comprising at last one of the foregoing organic polymers. Examples of the organic polymer are polyacetals, polyolefins, polyacrylics, polycarbonates, polystyrenes, polyesters, polyamides, polyamideimides, polyarylates, polyarylsulfones, polyethersulfones, polyphenylene sulfides, polyvinyl chlorides, polysulfones, polyimides, polyetherimides, polytetrafluoroethylenes, polyetherketones, polyether etherketones, polyether ketone ketones, polybenzoxazoles, polyphthalides, polyacetals, polyanhydrides, polyvinyl ethers, polyvinyl thioethers, polyvinyl alcohols, polyvinyl ketones, polyvinyl halides, polyvinyl nitriles, polyvinyl esters, polysulfonates, polysulfides, polythioesters, polysulfones, polysulfonamides, polyureas, polyphosphazenes, polysilazanes, styrene acrylonitrile, acrylonitrile-butadiene-styrene (ABS), polyethylene terephthalate, polybutylene terephthalate, polyurethane, ethylene propylene diene rubber (EPR), polytetrafluoroethylene, fluorinated ethylene propylene, perfluoroalkoxyethylene, polychlorotrifluoroethylene, polyvinylidene fluoride, or the like, or a combination comprising at least one of the foregoing organic polymers.

Examples of blends of thermoplastic resins include acrylonitrile-butadiene-styrene/nylon, polycarbonate/acrylonitrile-butadiene-styrene, acrylonitrile butadiene styrene/polyvinyl chloride, polyphenylene ether/polystyrene, polyphenylene ether/nylon, polysulfone/acrylonitrile-butadiene-styrene, polycarbonate/thermoplastic urethane, polycarbonate/polyethylene terephthalate, polycarbonate/polybutylene terephthalate, thermoplastic elastomer alloys, nylon/elastomers, polyester/elastomers, polyethylene terephthalate/polybutylene terephthalate, acetal/elastomer, styrene-maleicanhydride/acrylonitrile-butadiene-styrene, polyether etherketone/polyethersulfone, polyether etherketone/polyetherimide polyethylene/nylon, polyethylene/polyacetal, or the like.
Examples of thermosetting resins include polyurethane, natural rubber, synthetic rubber, epoxy, phenolic, polyesters, polyamides, silicones, or the like, or a combination comprising at least one of the foregoing thermosetting resins. Blends of thermoset resins as well as blends of thermoplastic resins with thermosets can be utilized.

The organic polymer is generally used in amounts of 10 to 85 weight percent (wt%), of the total weight of the moldable composition. The organic polymer is generally used in amounts of greater than or equal to 33, specifically greater than or equal to 35, and more specifically greater than or equal to 40 wt%, of the total weight of the moldable composition. The organic polymer is furthermore generally used in amounts of less than or equal to 80, specifically less than or equal to 75, and more specifically less than or equal to 70 wt%, of the total weight of the moldable composition.

The filler composition used in the moldable composition comprises graphite and boron nitride. Graphite employed in the moldable composition may be synthetically produced or naturally produced. It is desirable to use graphite that is naturally produced. There are three types of naturally produced graphite that are commercially available. They are flake graphite, amorphous graphite and crystal vein graphite.

Flake graphite, as indicated by the name, has a flaky morphology. Amorphous graphite is not truly amorphous as its name suggests but is actually crystalline. Amorphous graphite is available in average sizes of 5 micrometers to 10 centimeters. Crystal vein graphite generally has a vein like appearance on its outer surface from which it derives its name. Crystal vein graphite is commercially available in the form of flakes from Asbury Graphite and Carbon Inc Carbons.

Synthetic graphite can be produced from coke and/or pitch that are derived from petroleum or coal. Synthetic graphite is of higher purity than natural graphite, but not as crystalline. One type of synthetic graphite is electrographite, which is produced from calcined petroleum coke and coal tar pitch in an electric furnace. Another type of synthetic graphite is produced by heating calcined petroleum pitch to 2800°C. Synthetic graphite tends to be of a lower density, higher porosity, and higher electrical resistance than natural graphite.

It is desirable to use graphite having average particle sizes of 1 to 5,000 micrometers. Within this range graphite particles having sizes of greater than or equal to 3, specifically greater than or equal to 5 micrometers may be advantageously used. Also desirable are graphite particles having sizes of less than or equal to 4,000, specifically less than or equal to 3,000, and more specifically less than or equal to 2,000 micrometers. Graphite is generally flake like with an aspect ratio greater than or equal to 2, specifically greater than or equal to 5, more specifically greater than or equal to 10, and even more specifically greater than or equal to 50.

Graphite is generally used in amounts of greater than or equal to 10 wt% to 30 wt% of the total weight of the moldable composition. Within this range, graphite is generally used in amounts greater than or equal to 13 wt%, specifically greater or equal to 14 wt%, more specifically greater than or equal to 15 wt% of the total weight of the moldable composition. Graphite is furthermore generally used in amounts less than or equal to 28 wt%, specifically less than or equal to 26 wt%, more specifically less than or equal to 25 wt% of the total weight of the moldable composition.

Boron nitride may be cubic boron nitride, hexagonal boron nitride, amorphous boron nitride, rhombohedral boron nitride, or another allotrope. It may be used as powder, agglomerates, or fibers.

Boron nitride has an average particle size of 1 to 5,000 micrometers. Within this range boron nitride particles having sizes of greater than or equal to 3, specifically greater than or equal to 5 micrometers may be advantageously used. Also desirable are boron nitride particles having sizes of less than or equal to 4,000, specifically less than or equal to 3,000, and more specifically less than or equal to 2,000 micrometers. Boron nitride is generally flake like with an aspect ratio greater than or equal to 2, specifically greater than or equal to 5, more specifically greater than or equal to 10, and even more specifically greater than or equal to 50. An exemplary particle size is 125 to 300 micrometers with a crystal size of about 10 to 15 micrometers. The boron nitride particles can exist in the form of agglomerates or as individual particles or as combinations of individual particles and agglomerates. Exemplary boron nitrides are PT350, PT360 or PT 370, commercially available from General Electric Advanced Materials

Boron nitride is generally used in amounts of about 5 wt% to 60 wt% of the total weight of the moldable composition. Within this range, boron nitride is generally used in amounts greater than or equal to 8 wt%, specifically greater or equal to 10 wt%, more specifically greater than or equal to 12 wt% of the total weight of the moldable composition. Boron nitride is furthermore generally used in amounts less than or equal to 55 wt%, specifically less than or equal to 50 wt%, more specifically less than or equal to 45 wt% of the total weight of the moldable composition. An exemplary amount of boron nitride is 15 to 40 wt% of the total weight of the moldable composition.

Additionally, the moldable composition may optionally also contain additives such as antioxidants, such as, for example, organophosphites, for example, tris(nonyl-phenyl)phosphite, tris(2,4-di-t-butylphenyl)phosphite, bis(2,4-di-t-butylphenyl)pentaerythritol diphosphite or distearyl pentaerythritol diphosphite, alkylated monophenols, polyphenols and alkylated reaction products of polyphenols with dienes, such as, for example, tetrakis[methylene(3,5-di-tert-butyl-4-hydroxyhydrocinnamate)] methane, 3,5-di-tert-butyl-4-hydroxyhydrocinnamate, octadecyl 2,4-di-tert-butylphenyl phosphite, butylated reaction products of para-cresol and dicyclopentadiene, alkylated hydroquinones, hydroxylated thiodiphenyl ethers, alkylidene-bisphenols, benzyl compounds, esters of beta-(3,5-di-tert-butyl-4-hydroxyphenyl)-propionic acid with monohydric or polyhydric alcohols, esters of beta-(5-tert-butyl-4-hydroxy-3-methylphenyl)-propionic acid with monohydric or polyhydric alcohols; esters of thioalkyl or thioaryl compounds, such as, for example, distearylthiopropionate, dilaurylthiopropionate, ditridecylthiodipropionate, amides of beta-(3,5-di-tert-butyl-4-hydroxyphenyl)-propionic acid; fillers and reinforcing agents, such as, for example, silicates, titanium dioxide (TiO₂), calcium carbonate, talc, mica and other additives such as, for example, mold release agents, ultraviolet absorbers, stabilizers such as light stabilizers and others, lubricants, plasticizers, pigments, dyes, colorants, anti-static agents, blowing agents, flame retardants, impact modifiers, among others, as well as combinations comprising at least one of the foregoing additives.

The organic polymer together with graphite and boron nitride may generally be processed in several different ways such as, melt blending, solution blending, or the like, or combinations comprising at least one of the foregoing methods of blending. Melt blending of the moldable composition involves the use of shear force, extensional force, compressive force, ultrasonic energy, electromagnetic energy, thermal energy or combinations comprising at least one of the foregoing forces or forms of energy and is conducted in processing equipment wherein the aforementioned forces or forms of energy are exerted by a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, or combinations comprising at least one of the foregoing.

Melt blending involving the aforementioned forces may be conducted in machines such as single or multiple screw extruders, Buss kneader, Henschel, helicones, Ross mixer, Banbury, roll mills, molding machines such as injection molding machines, vacuum forming machines, blow molding machine, or the like, or combinations comprising at least one of the foregoing machines.

In one embodiment, the organic polymer in powder form, pellet form, sheet form, or the like, may be first dry blended with graphite and boron nitride in a Henschel or in a roll mill, prior to being fed into a melt blending device such as an extruder or Buss kneader. It may be desirable to introduce graphite, boron nitride, or a combination of graphite and boron nitride into the melt blending device in the form of a masterbatch. In such a process, the masterbatch may be introduced into the melt blending device downstream of the point where the organic polymer is introduced.

A melt blend is one where at least a portion of the organic polymer has reached a temperature greater than or equal to about the melting temperature, if the resin is a semi-crystalline organic polymer, or the flow point (e.g., the glass transition temperature) if the resin is an amorphous resin during the blending process. A dry blend is one where the entire mass of organic polymer is at a temperature less than or equal to about the melting temperature if the resin is a semi-crystalline organic polymer, or at a temperature less than or equal to the flow point if the organic polymer is an amorphous resin and wherein organic polymer is substantially free of any liquid-like fluid during the blending process. A solution blend, as defined herein, is one where the organic polymer is suspended in a liquid-like fluid such as, for example, a solvent or a non-solvent during the blending process.

The moldable composition comprising the organic polymer and graphite and boron nitride may be subject to multiple blending and forming steps if desirable. For example, the moldable composition may first be extruded and formed into pellets. The pellets may then be fed into a molding machine where it may be formed into any desirable shape or product. Alternatively, the moldable composition emanating from a single melt blender may be formed into sheets or strands and subjected to post-extrusion processes such as annealing, uniaxial or biaxial orientation.

Solution blending may also be used to manufacture the moldable composition. The solution blending may also use additional energy such as shear, compression, ultrasonic vibration, or the like, to promote homogenization of graphite and boron nitride with the organic polymer. In one embodiment, an organic polymer suspended in a fluid may be introduced into an ultrasonic sonicator along with graphite and boron nitride. The mixture may be solution blended by sonication for a time period effective to disperse graphite and boron nitride onto the organic polymer particles. The organic polymer along with graphite and boron nitride may then be dried, extruded and molded if desired. It is generally desirable for the fluid to swell the organic polymer during the process of sonication. Swelling the organic polymer generally improves the ability of graphite and boron nitride to impregnate the organic polymer during the solution blending process and consequently improves dispersion. The moldable composition displays advantageous melt flow properties. In one embodiment, the moldable composition has a melt flow index of about 1 to about 30 grams per 10 minutes when measured at a temperature of 280°C under a load of 16 kg-f/cm². An exemplary melt flow index for the moldable composition is about 4 to about 20 grams per 10 minutes when measured at a temperature of 280°C under a load of 16 kg-f/cm².

In one embodiment, the moldable composition comprises a random distribution of graphite and boron nitride and has a thermal conductivity of greater than 2 Watts per meter-Kelvin (W/m-K). In another embodiment, the moldable composition generally has a thermal conductivity of 2 to 6 W/m-K. Within this range, it is generally desirable for the moldable composition to have a thermal conductivity greater than or equal to 2.2 W/m-K, specifically greater or equal to 2.3 W/m-K, more specifically greater than or equal to about 2.4 W/m-K. Also desirable is for the moldable composition to have a thermal conductivity less than or equal to 4.0 W/m-K, specifically less than or equal to 3.9 W/m-K, more specifically less than or equal to 3.8 W/m-K.

The moldable composition is electrically insulating. In one embodiment, the moldable composition has an electrical resistivity greater than or equal to 10¹³ ohm/sq.

The invention is further illustrated by the following non-limiting examples.

### EXAMPLES

### Examples 1-9

These examples demonstrate the improved thermal conductivity and the improved melt flow of the moldable compositions disclosed herein over comparative compositions that contain only boron nitride. The examples of this disclosure are all electrically insulating. Examples #1, 8 and 9 are comparative examples, while Example #'s 2-7 are representative of the moldable compositions of this disclosure. Boron nitride (BN) agglomerates, commercially available as PT-360, were supplied by General Electric Advanced Ceramic Corporation. Crystal Vein Graphite (C) was supplied by Asbury Graphite and Carbon Inc. The polyamide (PA) used was Nylon-6. Polypropylene (PP) added to improve the melt flow. Graphite and boron nitride were dry-mixed with the polyamide and polypropylene, and then fed through the main feeder of the extruder.

The moldable compositions were prepared using a 25 millimeter Werner and Pfleiderer twin-screw extruder. The extruder had 6 barrels set at temperatures of 23, 230, 240, 250, 260 and 270°C from the throat to the die respectively. The die was set at 280°C. Pellets obtained from the extruder were subjected to injection molding in a Larsen and Toubro injection molding machine.

The thermal conductivity measurements, electrical conductivity measurements, and melt flow indices for different moldable compositions are presented in Table 1. Thermal conductivity measurements were made using a laser flash and a probe method. A Netzsch(TM) Nanoflash instrument was used to conducted the laser flash testing according to ASTM standard E1461. Test specimen dimensions for the laser flash were 3 mm thick x 12.5 mm diameter for the Example #'s 1-9. Thermal conductivity (TC) was measured using an Elmer Pyris thermal conductivity probe, and is reported in Watts per Kelvin-meter (W/m-K). All measurements were conducted at room temperature on injection molded plaques.

Surface resistivity testing was conducted using ASTM D257 as a guide. The test specimens were about 3 mm thick x 50 mm in diameter. Samples are conditioned at 23°C and 50% relative humidity for 40 hours before testing. Amounts are reported in weight percent based on the total weight of the total moldable composition.

**Table 1**

| Example No. | C* (wt%) | BN* (wt%) | PA (wt%) | PP (wt%) | Surface Resistivity (ohm/sq) | Average Thermal Conductivity (W/m-K) | Std. Dev. Thermal Conductivity (W/m-K) | Viscosity (Pa-sec, at 4000 1/s, 255 C) | Decrease in Viscosity (%) | MFI (g/10 min) |
|---|---|---|---|---|---|---|---|---|---|---|
| 1¹ | 0 | 71 | 26 | 3 | 2.8E+14 | 2.2 | 0.7 | 240 | n/a | no flow |
| 2 | 13 | 58 | 26 | 3 | 1.9E+13 | 3.3 | 0.2 | 177 | 26 | 2.7 |
| 3 | 17 | 54 | 26 | 3 | 3.9E+13 | 3.2 | 0.2 | 161 | 33 | 14.7 |
| 4 | 20 | 51 | 26 | 3 | 2.0E+13 | 3.4 | 0.2 | 134 | 44 | N/A |
| 5 | 22 | 49 | 26 | 3 | 3.0E+13 | 3.2 | 0.2 | 139 | 42 | 9.7 |
| 6 | 26 | 45 | 26 | 3 | 3.8E+13 | 3.6 | 0.3 | 170 | 29 | 4.0 |
| 7 | 30.1 | 40.8 | 26 | 3 | 1.2E+13 | 4.0 | 0.3 | 181 | 25 | N/A |
| 8¹ | 32.7 | 38.2 | 26 | 3 | 2.9E+06 | 4.1 | 0.3 | 189 | 21 | 5.8 |
| 9¹ | 35.3 | 35.6 | 26 | 3 | 5.0E+06 | 3.8 | 0.1 | 212 | 12 | N/A |

| | | | | | | | | | | |
|---|---|---|---|---|---|---|---|---|---|---|
| ¹ = comparative example * = the combined volume loading of carbon and boron nitride for examples 1 through 9 was 55 volume percent. | | | | | | | | | | |

The data in Table 1 compares the thermal, electrical, and rheological properties of various mixed filler compositions (Example #'s 2-9) compared with the pure BN filled composition (Example #1). The graphite used in all these examples is crystal vein graphite (CVG). As can be seen in the Table 1, an increase of about 50% in thermal conductivity is achieved by adding 13wt% of graphite; the overall thermal conductivity increases from 2.2 to 3.3 W/m-K with this addition. In summary, the results indicate that the addition of graphite and boron nitride improves the thermal conductivity of moldable compositions over comparative compositions containing only boron nitride.

The surface resistivity results shown in Table 1 indicate that the electrical percolation threshold for graphite, in these dual-filled materials, is achieved in Example 7 that contains 30 wt% graphite. All mixed filler examples containing up to 30 wt% graphite were electrically insulating with a surface resistivity of E+13 ohm/sq. The materials become statically dissipative with a resistivity of E+6 ohm/sq with increased graphite loadings. The compositions also showed excellent insulative properties at high voltages. The composition containing 22 wt% CVG-graphite (Example # 5) was found to have a CTI (Comparative tracking index) greater than 600 volts (i.e., no failure up to 600 V, the highest voltage that can be applied by the instrument) when measured as per IEC112/ASTM D 6368.

The replacement of some of the boron nitride with a lubricious material such as graphite increases the melt flow of the material. This is shown by the viscosity and melt flow index (MFI) data in Table 1 where the viscosity at a shear rate of 4000 seconds⁻¹ is listed. A reduction in viscosity is tabulated based on a comparison between that of the comparative sample (Example 1) to that of each graphite/BN material (Example 2-9). The data shows that the maximum reduction in viscosity, 44%, is achieved using 20 to 22 wt% graphite (Example 4 and 5). However, higher and lower levels of graphite addition still provide a significant improvement in melt flow, and thus improve the processability by injection molding.

### Examples 10 - 11

This set of experiments was performed to show the advantages of mixed filler systems of graphite and boron nitride versus filler systems that comprise only boron nitride in other resin systems. Sample #'s 10 - 11 contain 45 volume percent (vol%) of the filler composition. These samples were manufactured in a manner similar to the Example #'s 1 - 9. Example #'s 10 and 11 contain PC/ABS (polycarbonateacrylonitrile butadiene styrene blend) that is commercially obtained from the General Electric Company. The composition and the results for thermal conductivity and melt flow index are shown in the Table 2.

**Table 2**

| Example No. | C (Vol%) | BN (Vol%) | PC/ABS (Vol%) | Average Thermal Conductivity (W/m-K) | Std. Dev. Thermal Conductivity (W/m-K) | MFI (g/10 min) |
|---|---|---|---|---|---|---|
| 10 | 0 | 45 | 55 | too viscous to injection mold | | |
| 11 | 17 | 28 | 55 | 2.0 | 1.7 | 16 |

With the addition of 17 vol% graphite, a compound that was otherwise too viscous to flow (Example 10), became injection moldable with a melt flow index of 16 grams/10 minutes (Example 11).

### Example 12 - 14

These examples were conducted to demonstrate the effects of different types of graphite on thermal conductivity. Table 3 shows thermal and rheological data from three different types of graphite. These samples were manufactured in a manner similar to the Example #'s 1 - 9. Crystal vein graphite (CVG) graphite, which was used in the previous examples, is compared to natural graphite and synthetic graphite. CVG has the highest aspect ratio as compared with the other two. The polymeric resin comprised 90 wt% Nylon-6 and 10wt% polypropylene, based on the weight of the polymeric resin.

**Table 3**

| Example No. | Carbon Types | C (wt%) | BN (wt%) | Average Thermal Conductivity (W/m-K) | Std. Dev. Thermal Conductivity (W/m-K) | MFI (g/10 min) |
|---|---|---|---|---|---|---|
| 12 | Graphite- CVG | 22 | 49 | 3.0 | 0.2 | 9.7 |
| 13 | Graphite - natural | 22 | 49 | 3.5 | 0.2 | 2.7 |
| 14 | Graphite - synthetic | 22 | 49 | 2.7 | 0.6 | No flow |

The data indicates that CVG provides the best enhancement in flow. Natural graphite shows a moderate improvement, while synthetic graphite/BN compounds did not flow. All three compositions were electrically insulating. Thus, CVG graphite is the preferred carbon based filler for the aforementioned filler compositions.

### Examples 15 - 17

These examples were conducted to show the effect of the addition of other carbonaceous fillers to a composition comprising the organic polymer and the boron nitride. The other carbonaceous fillers selected for the examples were carbon fibers, multiwall carbon nanotubes (MWNTs) or carbon black. No graphite was added to the samples. The compositions along with the results are shown in the Table 4. These samples were manufactured in a manner similar to that described in the Examples #'s 1 - 9. While Table 4 shows the values of the carbonaceous and the boron nitride fillers, the remaining parts of the composition were a polymeric resin. The polymeric resin comprised 90 wt% Nylon-6 and 10wt% polypropylene, based on the weight of the polymeric resin.

**Table 4**

| Example No. | Carbon Types | C (vol%) | BN (vol%) | Average Thermal Conductivity (W/m-K) | Std. Dev. Thermal Conductivity (W/m-K) |
|---|---|---|---|---|---|
| 15 | carbon fiber | 4.8 | 51 | 1.3 | 0.2 |
| 16 | MWNT | 2.9 | 52 | 2.0 | 0.2 |
| 17 | carbon black | 10.3 | 45 | 1.9 | 0.6 |
| 18 | carbon fiber | 7.8 | 48 | 1.8 | 0.22 |
| 19 | MWNT | 3 | 52 | 3.0 | 0.60 |

As can be seen in the Table 4, the compositions containing carbon fibers, multi-wall nanotubes (MWNT), and carbon black, did not exhibit the enhanced thermal conductivity seen in the Examples 2-7 that used graphite in conjunction with boron nitride. All of the Examples 15 - 19 were electrically insulating and were too viscous to make a determination of the melt flow index. The use of carbon black, which is spherical in shape, actually decreased the thermal conductivity as well. Thus, graphite is the preferred carbon-based filler for improvements in thermal conductivity as well as melt flow and processability.

### Example 20

This example was conducted to demonstrate the lack of a synergy between graphite and other thermally conductive materials such alumina (Al₂O₃). Table 5 shows a composition having CVG graphite with alumina. Example 20 that is represented in the Table 5 can be compared with Example 5 in the Table 1. Both samples contain 17 volume percent of graphite. The balance of the composition is a polymer. The polymeric resin comprised 90 wt% Nylon-6 and 10wt% polypropylene, based on the weight of the polymeric resin. However, as can be seen from the Table 5, the sample is electrically conducting.

**Table 5**

| Example No. | C (vol%) | Al₂O₃ (vol%) | Average Thermal Conductivity (W/m-K) | Std. Dev. Thermal Conductivity (W/m-K) | Volume Resistivity (ohm-cm) |
|---|---|---|---|---|---|
| 20 | 17 | 38 | 2.6 | 0.08 | 80 |

Thus from the above examples, it can be seen that a combination of graphite and boron nitride in the moldable composition yields samples that are electrically insulating, but have a high thermal conductivity and are easily processable.

## Claims

1. A moldable composition, comprising:
an organic polymer;
a filler composition comprising:
graphite; and
boron nitride, wherein the moldable composition has an electrical resistivity greater than or equal to about 10¹³ ohm/sq, wherein the moldable composition has a melt flow index of about 1 to about 30 grams per 10 minutes when measured at a temperature of 280°C under a load of 16 kgf/cm².

2. The moldable composition of Claim 1, having a thermal conductivity of about 2 W/m-K to about 6 W/m-K.

3. The moldable composition of any one of Claims 1 or 2, having a Class A surface finish.

4. The moldable composition of any one of Claims 1 through 3, wherein the organic polymer is a thermoplastic resin, a blend of thermoplastic resins, a thermosetting resin, a blend of thermosetting resins, a blend of thermoplastic resins with thermosetting resins, a copolymer, a terpolymer, an oligomer, a homopolymer, a block copolymer, an alternating block copolymer, a random copolymer, a random block copolymer, a graft copolymer, a star block copolymer, a dendrimer, or a combination comprising at least one of the foregoing organic polymers.

5. The moldable composition of any one of Claims 1 through 4, wherein said organic polymer is a polyacetal, a polyolefin, a polyacrylic, a polycarbonate, a polystyrene, a polyester, a polyamide, a polyamideimide, a polyarylate, a polyarylsulfone, a polyethersulfone, a polyphenylene sulfide, a polyvinyl chloride, a polysulfone, a polyimide, a polyetherimide, a polytetrafluoroethylene, a polyetherketone, a polyether etherketone, a polyether ketone ketone, a polybenzoxazole, a polyphthalide, a polyacetal, a polyanhydride, a polyvinyl ether, a polyvinyl thioether, a polyvinyl alcohol, a polyvinyl ketone, a polyvinyl halide, a polyvinyl nitrile, a polyvinyl ester, polysulfonate, a polysulfide, a polythioester, a polysulfone, a polysulfonamide, polyurea, a polyphosphazene, a polysilazane, a styrene acrylonitrile, a acrylonitrile-butadiene-styrene, or a combination comprising at least one of the foregoing polymers.

6. The moldable composition of any one of Claims 1 through 5, wherein the organic polymer is a thermosetting resin and wherein the thermosetting resins are polyurethanes, natural rubbers, synthetic rubbers, epoxies, phenolics, silicones, or a combination comprising at least one of the foregoing polymers.

7. The moldable composition of Claim 1, wherein the graphite has a particle size of about 1 to about 5000 micrometers and wherein the graphite is a crystal vein graphite, a flake graphite, an amorphous graphite, a synthetic graphite, or a combination comprising at least one of the foregoing graphites.

8. The moldable composition of any one of Claims 1 or 7, wherein the graphite is present in an amount of 10 wt% to about 30 wt% based on the weight of the moldable composition.

9. The moldable composition of Claim 1, wherein the boron nitride has a particle size of about 1 to about 5,000 micrometers and wherein the boron nitride is a cubic boron nitride, a hexagonal boron nitride, an amorphous boron nitride, a rhombohedral boron nitride, or a combination comprising at least one of the boron nitrides.

10. An article manufactured from any one of the moldable compositions of Claims 1 through 10.

11. A method of manufacturing a moldable composition comprising:
melt blending a moldable composition comprising an organic polymer; a filler composition comprising graphite; and boron nitride, wherein the moldable composition has an electrical resistivity greater than or equal to about 10¹³ ohm/sq.

12. The method of Claim 11, further comprising molding the moldable composition.

13. The method of Claim 12, wherein the molding is injection molding.

14. An article manufactured by the method of Claim 11.

## Patentansprüche

1. Formbare Zusammensetzung, aufweisend:
ein organisches Polymer;
eine Füllstoffzusammensetzung, umfassend:
Graphit; und
Bornitrid,
wobei die formbare Zusammensetzung einen spezifischen elektrischen Widerstand größer als oder gleich etwa 10¹³ Ohm/sq aufweist, wobei die formbare Zusammensetzung einen Schmelzflußindex von etwa 1 bis etwa 30 Gramm pro 10 Minuten, gemessen bei einer Temperatur von 280 °C unter einer Last (unter einem Druck) von 16 kgf/cm², aufweist.

2. Formbare Zusammensetzung nach Anspruch 1, aufweisend eine thermische Leitfähigkeit von etwa 2 W/m-K bis etwa 6 W/m-K.

3. Formbare Zusammensetzung nach Anspruch 1 oder 2, aufweisend eine Oberflächenbeschaffenheit der Klasse A (*Class A Surface Finish*).

4. Formbare Zusammensetzung nach einem der Ansprüche 1 bis 3, wobei das organische Polymer ein thermoplastisches Harz, eine Mischung thermoplastischer Harze, ein wärmehärtendes (duroplastisches) Harz, eine Mischung wärmehärtender (duroplastischer) Harze, eine Mischung thermoplastischer Harze mit wärmehärtenden (duroplastischen) Harzen, ein Copolymer, ein Terpolymer, ein Oligomer, ein Homopolymer, ein Blockcopolymer, ein alternierendes Blockcopolymer, ein statistisches Copolymer, ein statistisches Blockcopolymer, ein Propfcopolymer, ein Sternblockcopolymer, ein Dendrimer oder eine Kombination, welche wenigstens eines der vorgenannten organischen Polymere aufweist, ist.

5. Formbare Zusammensetzung nach einem der Ansprüche 1 bis 4, wobei das organische Polymer ein Polyacetal, ein Polyolefin, ein Polyacryl, ein Polycarbonat, ein Polystyrol, ein Polyester, ein Polyamid, ein Polyamidimid, ein Polyarylat, ein Polyarylsulfon, ein Polyethersulfon, ein Polyphenylensulfid, ein Polyvinylchlorid, ein Polysulfon, ein Polyimid, ein Polyetherimid, ein Polytetrafluorethylen, ein Polyetherketon, ein Polyetheretherketon, ein Polyetherketonketon, ein Polybenzoxazol, ein Polyphthalid, ein Polyacetal, ein Polyanhydrid, ein Polyvinylether, ein Polyvinylthioether, ein Polyvinylalkohol, ein Polyvinylketon, ein Polyvinylhalogenid, ein Polyvinylnitril, ein Polyvinylester, ein Polysulfonat, ein Polysulfid, ein Polythioester, ein Polysulfon, ein Polysulfonamid, ein Polyharnstoff, ein Polyphosphazen, ein Polysilazan, ein Styrol/Acrylnitril, ein AcrylnitrilButadien/Styrol oder eine Kombination, welche mindestens eines der vorgenannten Polymere aufweist, ist.

6. Formbare Zusammensetzung nach einem der Ansprüche 1 bis 5, wobei das organische Polymer ein wärmehärtendes (duroplastisches) Harz ist und wobei die wärmehärtenden (duroplastischen) Harze Polyurethane, natürliche Kautschuke, synthetische Kautschuke, Epoxidharze, Phenole, Silikone oder eine Kombination, welche mindestens eines der vorgenannten Polymere aufweist, sind.

7. Formbare Zusammensetzung nach Anspruch 1, wobei der Graphit eine Partikelgröße von etwa 1 bis 5.000 µm aufweist und wobei der Graphit ein kristalliner Vein-Graphit (*Crystal Vein Graphite*), ein Flockengraphit, ein mikrokristalliner (amorpher) Graphit, ein synthetischer Graphit oder eine Kombination, welche mindestens einen der vorgenannten Graphite aufweist, ist.

8. Formbare Zusammensetzung nach einem der Ansprüche 1 bis 7, wobei der Graphit in Mengen von 10 Gew.-% bis etwa 30 Gew.-% vorhanden ist, bezogen auf das Gewicht der formbaren Zusammensetzung.

9. Formbare Zusammensetzung nach Anspruch 1, wobei das Bornitrid eine Partikelgröße von etwa 1 bis etwa 5.000 µm aufweist und wobei das Bornitrid ein kubisches Bornitrid, ein hexagonales Bornitrid, ein amorphes Bornitrid, ein rhomboedrisches Bornitrid oder eine Kombination, welche mindestens eines der vorgenannten Bornitrid aufweist, ist.

10. Gegenstand, hergestellt aus einer der formbaren Zusammensetzungen gemäß den Ansprüchen 1 bis 9.

11. Verfahren zur Herstellung einer formbaren Zusammensetzung, umfassend:
Schmelzmischen einer formbaren Zusammensetzung, welche ein organisches Polymer; eine Füllstoffzusammensetzung, aufweisend Graphit; und Bornitrid aufweist, wobei die formbare Zusammensetzung einen spezifischen elektrischen Widerstand von größer oder gleich etwa 10¹³ Ohm/sq aufweist.

12. Verfahren nach Anspruch 11, weiterhin umfassend das Formen der formbaren Zusammensetzung.

13. Verfahren nach Anspruch 12, wobei es sich bei dem Formen um Spritzgießen handelt.

14. Gegenstand, hergestellt nach dem Verfahren gemäß Anspruch 11.

## Revendications

1. Composition moulable comprenant:
un polymère organique;
une composition de remplissage comprenant:
du graphite; et
du nitrure de bore,
laquelle composition moulable a une résistivité électrique supérieure ou égale à environ 10¹³ ohm/sq, laquelle composition moulable a un indice de fluage d'environ 1 à environ 30 grammes pour 10 minutes en cas de mesure à une température de 280 °C sous une charge de 16 kgf/cm².

2. Composition moulable selon la revendication 1, ayant une conductivité thermique d'environ 2 W/m-K à environ 6 W/m-K.

3. Composition moulable selon l'une quelconque des revendications 1 ou 2, ayant un fini de surface de classe A.

4. Composition moulable selon l'une quelconque des revendications 1 à 3, dans laquelle le polymère organique est une résine thermoplastique, un mélange de résines thermoplastiques, une résine thermodurcissable, un mélange de résines thermodurcissables, un mélange de résines thermoplastiques et de résines thermodurcissables, un copolymère, un terpolymère, un oligomère, un homopolymère, un copolymère à blocs, un copolymère à blocs alterné, un copolymère aléatoire, un copolymère à blocs aléatoire, un copolymère greffé, un copolymère à blocs en étoile, un dendrimère, une combinaison comprenant au moins un des polymères organiques précédents.

5. Composition moulable selon l'une quelconque des revendications 1 à 4, dans laquelle ledit polymère organique est un polyacétal, une polyoléfine, un polyacrylique, un polycarbonate, un polystyrène, un polyester, un polyamide, un polyamideimide, un polyarylate, une polyarylsulfone, une polyéthersulfone, un sulfure de polyphénylène, un polychlorure de vinyle, une polysulfone, un polyimide, un polyétherimide, un polytétrafluoroéthylène, une polyéthercétone, une polyétheréthercétone, une polyéthercétonecétone, un polybenzoxazole, un polyphtalamide, un polyacétal, un polyanhydride, un éther polyvinylique, un thioéther polyvinylique, un alcool polyvinylique, une polyvinylcétone, un halogénure de polyvinyle, un nitrile de polyvinyle, un ester de polyvinyle, un polysulfonate, un polysulfure, un polythioester, une polysulfone, un polysulfonamide, une polyurée, un polyphosphazène, un polysilazane, un styrène-acrylonitrile, un acrylonitrile-butadiène-stryène, ou une combinaison comprenant au moins un des polymères précédents.

6. Composition moulable selon l'une quelconque des revendications 1 à 5, dans laquelle le polymère organique est une résine thermodurcissable et dans laquelle les résines thermodurcissables sont des polyuréthanes, des caoutchoucs naturels, des caoutchoucs synthétiques, des époxydes, des dérivés phénoliques, des silicones, ou une combinaison comprenant au moins un des polymères précédents.

7. Composition moulable selon la revendication 1, dans laquelle le graphite a une granulométrie d'environ 1 à environ 5 000 micromètres et dans laquelle le graphite est un graphite cristalline en veines, un graphite lamellaire, un graphite amorphe, un graphite synthétique ou une combinaison comprenant au moins un des graphites précédents.

8. Composition moulable selon l'une quelconque des revendications 1 à 7, dans laquelle le graphite est présent dans une quantité de 10 % en poids à environ 30 % en poids, sur la base du poids de la composition moulable.

9. Composition moulable selon la revendication 1, dans laquelle le nitrure de bore a une granulométrie d'environ 1 à environ 5 000 micromètres et dans laquelle le nitrure de bore est un nitrure de bore cubique, un nitrure de bore hexagonal, un nitrure de bore amorphe, un nitrure de bore rhomboédrique ou une combinaison comprenant au moins un des nitrures de bore précédents.

10. Article fabriqué à partir de l'une quelconque des compositions moulables selon les revendications 1 à 10.

11. Procédé de fabrication d'une composition moulable, comprenant:
le mélange en fusion d'une composition moulable comprenant un polymère organique; une composition de remplissage comprenant du graphite; et du nitrure de bore, dans lequel la composition moulable a une résistivité électrique supérieure ou égale à environ 10¹³ ohm/sq.

12. Procédé selon la revendication 1, comprenant en outre le moulage de la composition moulable.

13. Procédé selon la revendication 12, dans lequel le moulage est le moulage par injection.

14. Article fabriqué à l'aide du procédé selon la revendication 11.
